# EUROPEAN PATENT APPLICATION

(11) **EP 4 767 883 A1**
(43) Date of publication of application: **01.07.2026**
(21) Application number: 25227304.0
(22) Date of filing: 26.12.2025
(51) Int. Cl.: A47J 37/06

(54) **COOKING DEVICE**

(30) Priority: 31.12.2024 CN 202423321957 U
(71) Applicant: Shenzhen Typhur Technology Co., Ltd, Shenzhen, Guangdong 518067 (CN)
(72) Inventor: LI, Shilei, Nanshan District, Shenzhen City, Guangdong, 518067 (CN); CHEN, Zuxiang, Futian District, Shenzhen, Guangdong (CN)
(74) Representative: KIPA AB

(57) **Abstract**

A cooking device comprises a housing, comprising an upper cover and a bottom shell, the upper cover defines a first cavity and a second cavity, the bottom shell defines a heat insulation cavity, and the upper cover and the bottom shell enclose a cooking cavity; a circuit board mounted in the first cavity; and a fan electrically connected to the circuit board; the upper cover defines a first air inlet and an air outlet. The first heat dissipation channel and the second heat dissipation channel respectively introduce cold air from the upper cover and the bottom shell, the two paths of cold air dissipate heat for the circuit board and other components in the first heat dissipation channel, and are finally discharged from the third heat dissipation channel; thereby improving heat dissipation efficiency to meet the heat dissipation requirements of the cooking device.

## Description

### Technical Field

The present application relates to the technical field of household appliances, and specifically to a cooking device.

### Background Art

Air fryers are commonly used household appliances, with circuit boards and other components on the inner wall. Due to the high internal temperature during cooking in air fryers, heat dissipation is required for the circuit boards and other components to ensure their normal operation.

The heat dissipation channels of current air fryers are single, which cannot meet the heat dissipation requirements of high-temperature air fryers.

### Summary

The present application provides a cooking device with a new heat dissipation channel designed to solve the problem of large volume of the upper cover.

In one embodiment, a cooking device is provided, comprising:
a housing comprising an upper cover and a bottom shell, the upper cover defines a first cavity and a second cavity, the upper cover and/or the bottom shell defines a heat insulation cavity, and the upper cover and the bottom shell enclose a cooking cavity;
a circuit board mounted in the first cavity; and
a fan electrically connected to the circuit board, the fan comprises a first blade and a second blade, the first blade is located in the second cavity, and the second blade is located in the cooking cavity;
the upper cover defines a first air inlet and an air outlet, the first air inlet communicates with the first cavity, and a first heat dissipation channel is formed in the first cavity; the bottom shell or a bottom of the upper cover defines a second air inlet, the second air inlet communicates with the heat insulation cavity, the heat insulation cavity communicates with the first cavity, and a second heat dissipation channel is formed in the heat insulation cavity; the first cavity communicates with the second cavity, the second cavity communicates with the air outlet, a third heat dissipation channel is formed in the second cavity, and the third heat dissipation channel communicates with the first heat dissipation channel; the air outlet also communicates with the cooking cavity.

In one embodiment, the first air inlet is defined on a side surface of the upper cover, the air outlet is defined on a side surface or a top of the upper cover, or the air outlet is defined on a bottom or a side surface of the bottom shell, and the first blade is defined in the first heat dissipation channel, the third heat dissipation channel, or a communication point between the first heat dissipation channel and the third heat dissipation channel; during heat dissipation, a first path of air enters the first heat dissipation channel from the first air inlet on the top or side surface of the upper cover, and a second path of air enters the second heat dissipation channel from the second air inlet on the bottom or side surface of the bottom shell, and then enters the first heat dissipation channel; the first blade is configured to drive the first path of air and the second path of air to merge into the third heat dissipation channel and discharge from the air outlet.

In one embodiment, the first air inlet and the air outlet are located on the same circumference or the same annular ring of the upper cover.

In one embodiment, the first air inlet and the air outlet are arranged side by side.

In one embodiment, the upper cover defines two first air inlets and one air outlet, one first air inlet is located on one side of the air outlet, and the other first air inlet is located on the other side of the air outlet.

In one embodiment, the upper cover defines a first inner cover and a second inner cover, the first inner cover and the upper cover enclose the first cavity, and the first inner cover and the second inner cover enclose the second cavity; the bottom shell defines a third inner cover, the bottom shell and the third inner cover enclose the heat insulation cavity, and the second inner cover and the third inner cover enclose the cooking cavity.

In one embodiment, the upper cover, the first inner cover, and the second inner cover are dome structures, and the first cavity surrounds an upper portion and peripheries of the second cavity.

In one embodiment, the first inner cover is defined with a first opening and a second opening, the first opening communicates with the second cavity, and the first opening is aligned and communicates with the air outlet; the second inner cover defines a third opening, the third opening communicates with the cooking cavity, and the third opening, the second opening, and the air outlet are sequentially aligned and communicate.

In one embodiment, a first partition plate is defined between the first opening and the second opening and the first air inlet; and/or a second partition plate is defined between the first opening and the second opening.

In one embodiment, the first opening is arranged side by side above the second opening.

In one embodiment, the first air inlet is defined with one or more first guide plates, the air outlet is defined with one or more second guide plates, and the inclination directions of the first guide plates and the second guide plates are different, so that a flow direction of cold air entering the first air inlet does not intersect with a flow direction of hot air discharged from the air outlet.

In one embodiment, the first guide plates are inclined downward to guide cold air below the first air inlet into the first air inlet; and/or the second guide plates are inclined upward to guide hot air discharged from the air outlet to discharge upward.

In one embodiment, the cooking cavity defines a support member, the support member is configured to place food, a first heating element is defined above the support member, and a second heating element is defined below the support member.

According to the cooking device of the above embodiments, due to the provision of a first heat dissipation channel, a second heat dissipation channel, and a third heat dissipation channel, the first heat dissipation channel and the second heat dissipation channel respectively introduce cold air from the upper cover and the bottom shell, the two paths of cold air dissipate heat for the circuit board and other components in the first heat dissipation channel, and are finally discharged from the third heat dissipation channel; the first heat dissipation channel and the second heat dissipation channel enable the introduction of two paths of cold air for heat dissipation, which can increase the amount of cold air entering, and the introduction of two paths of cold air from different directions can also increase the contact area with the circuit board and other components, thereby improving heat dissipation efficiency to meet the heat dissipation requirements of the cooking device.

### Brief Description of the Drawings

Figure 1 is a schematic structural diagram of a cooking device in one embodiment;
Figure 2 is a cross-sectional view of a cooking device in one embodiment;
Figure 3 is a schematic diagram of the air flow direction in a cooking device in one embodiment;
Figure 4 is a schematic diagram of the air flow direction in a cooking device in one embodiment;
Figure 5 is a schematic structural diagram of the first inner cover of a cooking device in one embodiment;
Figure 6 is a schematic structural diagram of the second inner cover of a cooking device in one embodiment;
Figure 7 is a schematic structural diagram of the first air inlet and air outlet of a cooking device in one embodiment;
the reference signs are as follows:
1- housing, 11- upper cover, 111- first cavity, 112- second cavity, 113- first air inlet, 1131- first guide plate, 114- air outlet, 1141- second guide plate, 115- first partition plate, 116- first through hole, 117- second through hole, 12- bottom shell, 121- heat insulation cavity, 122- cooking cavity, 123- second air inlet, 13- first inner cover, 131-first opening, 132- second opening, 133- second partition plate, 14- second inner cover, 141- third opening, 142- third partition plate, 15- third inner cover, 16- support member;
2- circuit board;
3- fan, 31- first blade, 32- second blade, 33- motor, 34- rotating shaft;
4- first heating element;
5- second heating element.

### Detailed Description

The present application is further described in detail below through specific embodiments in combination with the accompanying drawings. Similar elements in different embodiments are assigned associated similar element numbers. In the following embodiments, many detailed descriptions are provided to enable the present application to be better understood. However, those skilled in the art can readily recognize that some features may be omitted in different situations, or may be replaced by other elements, materials, or methods. In some cases, some operations related to the present application are not shown or described in the specification to avoid overwhelming the core part of the present application with excessive descriptions, and for those skilled in the art, detailed description of these related operations is not necessary, as they can fully understand the related operations based on the description in the specification and general technical knowledge in the art.

In addition, the features, operations, or characteristics described in the specification may be combined in any appropriate manner to form various embodiments. At the same time, the steps or actions in the method description may also be sequentially exchanged or adjusted in a manner apparent to those skilled in the art. Therefore, the various sequences in the specification and drawings are only for clearly describing a certain embodiment and do not imply a necessary sequence unless otherwise specified that a certain sequence must be followed.

The numbering of components herein, such as "first," "second," etc., is only used to distinguish the described objects and does not have any sequential or technical meaning.

The terms "connection" and "coupling" in the present application, unless otherwise specified, include both direct and indirect connections (couplings). The up-down direction herein refers to the direction in the placed and used state of the cooking device.

In one embodiment, a cooking device is provided, which may be an air fryer or other devices that cook food through electric heating.

The cooking device of this embodiment redesigns the heat dissipation channels in the upper cover, setting part of the air intake channels and air exhaust channels in the upper cover at the same height position to form staggered heat dissipation channels. Specifically, the air intake channels and heat dissipation channels around the upper cover are at the same height or approximately the same height position, and the air intake channels and heat dissipation channels in the middle of the upper cover are arranged up and down, which can reduce the space occupied by the intake channels and exhaust channels, allowing the upper cover to be miniaturized, for example, the upper cover can be set to a dome, semicircular, or other smaller volume structures. Moreover, the air inlet and air outlet of the upper cover can be set as an integrated structure, which is simpler and more aesthetically pleasing.

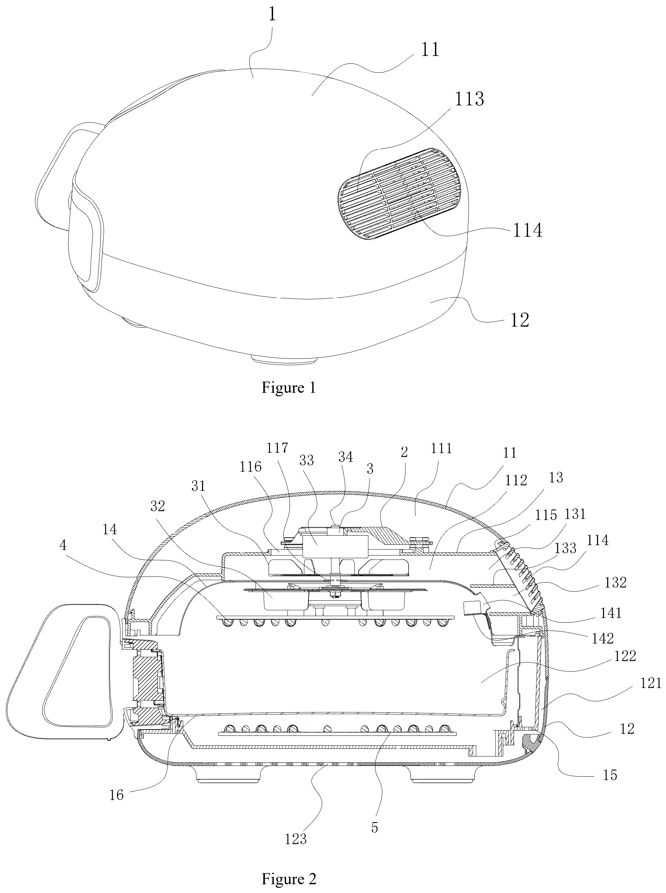

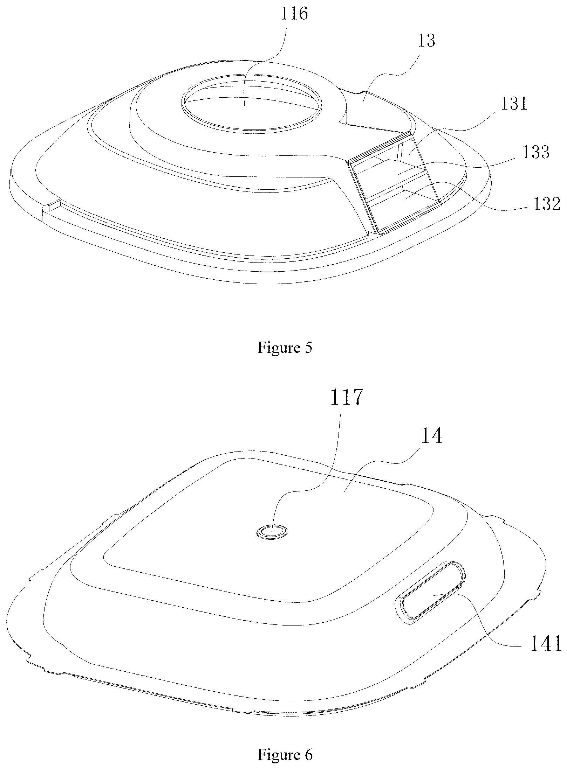

Referring to Figures 1 to 6, the cooking device of this embodiment mainly comprises a housing 1, a circuit board 2, and a fan 3, and the cooking device also comprises other components such as a first heating element 4 and a second heating element 5.

The housing 1 comprises an upper cover 11 and a bottom shell 12, the upper cover 11 is defined on the bottom shell 12, and the upper cover 11 and the bottom shell 12 enclose a complete housing. The upper cover 11 and the bottom shell 12 may also be a fixed structure, with a drawer-type structure on the side surfaces of the upper cover 11 and the bottom shell 12, through which food can be taken out and placed.

In other embodiments, the upper cover 11 may also be set as a flip-type structure. One side of the upper cover 11 is rotatably connected to the bottom shell 12 through a hinge or similar structure, the other side of the upper cover 11 may define a snap structure or locking structure connected to the bottom shell 12, and the upper cover 11 can be flipped open relative to the bottom shell 12 to place and take out food.

In other embodiments, the upper cover 11 may also be set as a detachable structure. The upper cover 11 and the bottom shell 12 are detachably snap-connected or locked, and the upper cover 11 can be separated from the bottom shell 12 when opened, and the separable structure of the upper cover 11 can also place and take out food.

In this embodiment, the upper cover 11 defines a first cavity 111 and a second cavity 112, the first cavity 111 and the second cavity 112 are separated, a portion of the first cavity 111 is located above the second cavity 112, and a portion of the first cavity 111 is at the same height or similar height position as the second cavity 112. Specifically, the first cavity 111 surrounds the peripheries and upper portion of the second cavity 112, the middle of the first cavity 111 is located above the second cavity 112, and the middle position of the first cavity 111 communicates with the middle position of the second cavity 112, the peripheries of the first cavity 111 are at the same height or similar height position as the second cavity 112, and the peripheral areas of the first cavity 111 surround the peripheries of the second cavity 112.

The upper cover 11 defines a first inner cover 13 and a second inner cover 14, and the first inner cover 13 and the second inner cover 14 are mounted in the upper cover 11. The upper cover 11 may be a dome structure, the first inner cover 13 and the second inner cover 14 are dome structures similar to the upper cover 11, and the structures of the upper cover 11, the first inner cover 13, and the second inner cover 14 are sequentially reduced. The first inner cover 13 is located above the second inner cover 14, the first inner cover 13 and the upper cover 11 enclose the first cavity 111, and the second inner cover 14 and the first inner cover 13 enclose the second cavity 112. The first inner cover 13 and the second inner cover 14 may be an integrated structure or a structure composed of multiple shells.

The first inner cover 13, the second inner cover 14, and the upper cover 11 may be fixedly connected in sequence by screw connection, welding, snapping, or the like. In other embodiments, any two or all three of the upper cover 11, the first inner cover 13, and the second inner cover 14 may be set as an integrated structure. The upper cover 11 defines corresponding mounting ports and mounting cover plates, which can also achieve the mounting of internal components.

In this embodiment, the outer surface of the upper cover 11 defines a first air inlet 113 and an air outlet 114, the first air inlet 113 communicates with the first cavity 111, and the first cavity 111 forms a first heat dissipation channel, that is, the first cavity 111 is a first air intake channel. The air outlet 114 communicates with the second cavity 112, and the second cavity 112 forms a second heat dissipation channel, that is, the second cavity 112 is an air exhaust channel. Air can enter the upper cover 11 from the first air inlet 113, pass through the first cavity 111 (first heat dissipation channel) and the second cavity 112 (second heat dissipation channel) in sequence, and then be discharged from the air outlet 114.

The first inner cover 13 defines a first opening 131 and a second opening 132, the side surface of the first inner cover 13 defines the first opening 131 and the second opening 132, the first opening 131 and the second opening 132 are respectively aligned with the air outlet 114, and the second cavity 112 communicates with the air outlet 114 through the first opening 131.

In this embodiment, the bottom shell 12 defines a heat insulation cavity 121 and a cooking cavity 122, the cooking cavity 122 is used for placing and cooking food, and the cooking cavity 122 is enclosed by the upper cover 11 and the bottom shell 12 into a relatively closed structure. The heat insulation cavity 121 is defined around and below the cooking cavity 122, the heat insulation cavity 121 wraps the cooking cavity 122, which can provide heat insulation and preservation for the cooking cavity 122, avoiding heat overflow from the cooking cavity 122 to the bottom shell 12 and its outer surface. At the same time, the first cavity 111 and the second cavity 112 of the upper cover 11 also have heat insulation and preservation functions, which can avoid heat overflow from the cooking cavity 122 to the upper cover 11 and its outer surface.

The bottom shell 12 defines a third inner cover 15, the third inner cover 15 and the bottom shell 12 enclose the heat insulation cavity 121, the third inner cover 15 forms a cooking cavity 122 with an opening, and the third inner cover 15 and the second inner cover 14 enclose a relatively sealed heat insulation cavity 121.

The second inner cover 14 defines a third opening 141, and the third opening 141 communicates with the cooking cavity 122. The side surface of the second inner cover 14 defines the third opening 141, and the third opening 141, the second opening 132, and the air outlet 114 are sequentially aligned and communicate.

The third inner cover 15 may be fixedly connected to the bottom shell 12 by screw connection, welding, snapping, or the like. In other embodiments, the bottom shell 12 and the third inner cover 15 may be an integrated structure.

In this embodiment, the bottom surface of the bottom shell 12 defines a second air inlet 123, the lower end of the bottom shell 12 defines protruding support feet, so that the second air inlet 123 on the bottom surface of the bottom shell 12 can achieve air intake. Setting the second air inlet 123 on the bottom surface of the bottom shell 12 forms a hidden design, which is more aesthetically pleasing; and cold air entering from the bottom surface of the bottom shell 12 can pass through more areas, providing better heat dissipation. In other embodiments, the second air inlet 123 may also be defined at the lower end position of the circumferential outer side surface of the bottom shell 12.

In this embodiment, the second air inlet 123 communicates with the heat insulation cavity 121, and the heat insulation cavity 121 forms a third heat dissipation channel. Corresponding openings are defined on the upper end surface of the bottom shell 12 and the lower end surface of the upper cover 11, so that the upper end of the heat insulation cavity 121 communicates with the lower end of the first cavity 111. Air can enter the bottom shell 12 from the second air inlet 123, pass through the heat insulation cavity 121 (third heat dissipation channel), the first cavity 111 (first heat dissipation channel), and the second cavity 112 (second heat dissipation channel) in sequence, and then be discharged from the air outlet 114. That is, the air in the third heat dissipation channel and the first heat dissipation channel merges into the second heat dissipation channel and is then discharged together from the air outlet 114.

The air outlet 114 also communicates with the cooking cavity 122, the cooking cavity 122 may communicate directly with the air outlet 114, or the cooking cavity 122 may communicate with the second cavity 112 to achieve indirect communication with the air outlet 114, for example, the cooking cavity 122 communicates with the air outlet 114 through the third opening 141. The air outlet 114 can serve as both the air inlet and air outlet of the cooking cavity 122. Since the air intake and exhaust volume in the cooking cavity 122 is relatively small, the air intake and exhaust can be combined into one port, which is more aesthetically pleasing.

In other embodiments, the upper cover 11 may also define independent air inlets and air outlets, and the cooking cavity 122 communicates with the independent air inlets and air outlets, which can also achieve communication between the cooking cavity 122 and the external air, realizing air intake and exhaust for the cooking cavity 122.

In this embodiment, the circuit board 2 is mounted in the first cavity 111, the circuit board 2 is the control module of the cooking device, which can control the cooking temperature and cooking mode. The first heat dissipation channel formed by the first cavity 111 can achieve good air heat dissipation for the circuit board 2, keeping the circuit board 2 in a relatively suitable low-temperature working state to ensure the normal operation of the circuit board 2.

The fan 3 mainly comprises a first blade 31 and a second blade 32, the fan 3 also comprises a motor 33 and a rotating shaft 34, the motor 33 is connected to the rotating shaft 34, the motor 33 is mounted in the first cavity 111, the motor 33 is electrically connected to the circuit board 2, and the circuit board 2 is used to control the start-stop and speed of the motor 33. The middle of the first cavity 111 and the second cavity 112 defines a communicating first through hole 116, the first through hole 116 is defined in the middle of the first inner cover 13, and the middle of the second cavity 112 and the cooking cavity 122 defines a communicating second through hole 117, the second through hole 117 is defined in the middle of the second inner cover 14, the rotating shaft 34 passes through the first through hole 116 and the second through hole 117 from the first cavity sequentially from top to bottom, and the lower end of the rotating shaft 34 is located in the cooking cavity 122. The first blade 31 is mounted at the middle position of the rotating shaft 34, and the first blade 31 is located in the second cavity 112, the first blade 31 is close to the first through hole 116, the aperture of the first through hole 116 is large, so that the first through hole 116 still has sufficient space for air circulation after passing through the rotating shaft 34, and the first blade 31 is used to discharge the air in the first cavity 111 and the heat insulation cavity 121 into the second cavity 112, that is, the first blade 31 serves as the power source for driving air flow for heat dissipation.

In other embodiments, part or all of the first blade 31 is located in the first through hole 116, the first blade 31 is located at the communication point between the first heat dissipation channel and the third heat dissipation channel, and the first blade 31 can also be used to discharge the air in the first heat dissipation channel and the second heat dissipation channel into the third heat dissipation channel.

In other embodiments, the first blade 31 may also be defined in the first cavity 111 and close to the first through hole 116, and the first blade 31 can also be used to discharge the air in the first heat dissipation channel and the second heat dissipation channel into the third heat dissipation channel.

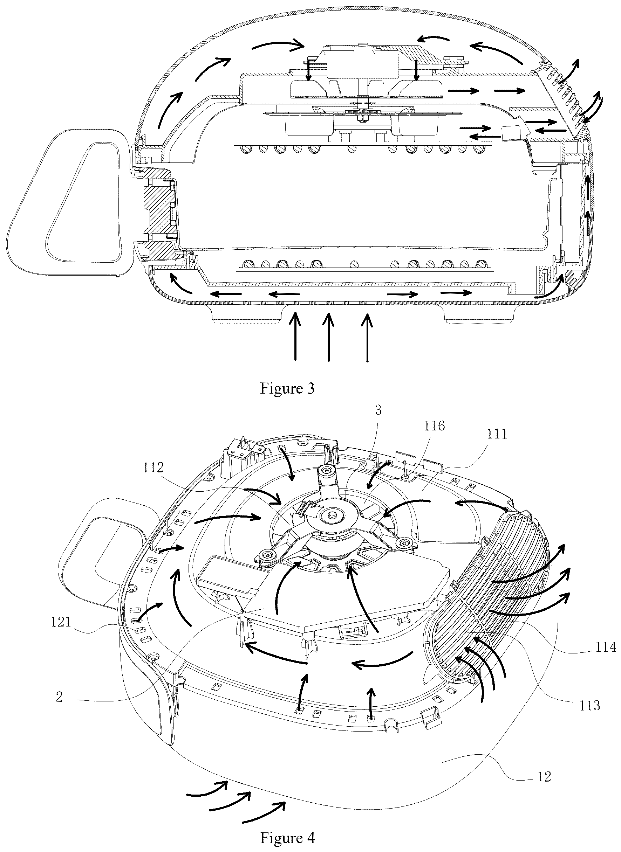

Referring to Figure 4, under the drive of the first blade 31, the first path of air enters the first cavity 111 (first heat dissipation channel) from the first air inlet 113 on the side surface of the upper cover 11, the second path of air enters the heat insulation cavity 121 (second heat dissipation channel) from the second air inlet 123 at the bottom of the bottom shell 12, the first blade 31 then drives the first path of air and the second path of air to merge from the first through hole 116 into the second cavity 112 (third heat dissipation channel), and finally discharges from the air outlet 114 on the side surface of the upper cover 11. When cold air flows through the first cavity 111 and the heat insulation cavity 121, it can exchange heat with heating components such as the circuit board 2 and the motor 33 in the first cavity 111, taking away the heat generated by the heating components to achieve heat dissipation, and can also dissipate heat from the heat insulation cavity 121.

The second blade 32 is mounted at the lower end of the rotating shaft 34, the second blade 32 is located in the cooking cavity 122, the second blade 32 is located at the upper end of the cooking cavity 122, and the second blade 32 is used to blow hot air onto the food and around the food to achieve cooking of the food. The second through hole 117 is relatively small, the inner diameter of the second through hole 117 is slightly larger than the rotating shaft 34, the second through hole 117 can pass through the rotating shaft 34, and minimize the gap formed after the second through hole 117 passes through the rotating shaft 34 to avoid heat leakage from the cooking cavity 122 through the second through hole 117.

In this embodiment, the cooking cavity 122 defines a support member 16, the support member 16 is a tray structure, and the support member 16 is used for placing food. The support member 16 can also serve as a partition structure between the cooking cavity 122 and the heat insulation cavity 121.

The first heating element 4 is defined above the support member 16, the first heating element 4 is located below the second blade 32, the first heating element 4 may be a resistance heating structure such as a copper tube, the first heating element 4 is electrically connected to the circuit board 2, the circuit board 2 controls the heating power and heating time of the first heating element 4, the first heating element 4 is used to convert electrical energy into thermal energy, the first heating element 4 is used to heat the surrounding air, and the second blade 32 is used to blow the hot air around the first heating element 4 to the food below, heating the upper portion of the food to achieve cooking of the food.

The second heating element 5 is located below the support member 16, the second heating element 5 is located at the lower end of the cooking cavity 122, the second heating element 5 may also be a resistance heating structure such as a copper tube, the second heating element 5 is electrically connected to the circuit board 2, the circuit board 2 controls the heating power and heating time of the second heating element 5, and the second heating element 5 is used to convert electrical energy into thermal energy. The second heating element 5 may be directly connected to the support member 16, and the second heating element 5 is used to directly heat the support member 16, achieving heating of the lower portion of the food to achieve cooking of the food.

In other embodiments, the cooking device may not define the second heating element 5, and cooking of some foods can also be achieved by using the first heating element 4 defined above.

In this embodiment, the direction and trajectory of the heat dissipation air flow are as shown in Figures 3 and 4, the first air intake heat dissipation route F1: first air inlet 113 - first cavity 111 (first heat dissipation channel) - first through hole 116; the second air intake heat dissipation route F2: second air inlet 123 - heat insulation cavity 121 (second heat dissipation channel) - first cavity 111 (first heat dissipation channel) - first through hole 116; the air exhaust heat dissipation route F3: first through hole 116 - second cavity 112 (third heat dissipation channel) - first opening 131 - air outlet 114. The first air intake heat dissipation route F1 and the second air intake heat dissipation route F2 mix in the first cavity 111 and merge into the second cavity 112 (third heat dissipation channel) through the first through hole 116, that is, the upper and lower air intake channels discharge hot air through the same air exhaust channel.

In this embodiment, the first air inlet 113 and the air outlet 114 are located on the same circumference or the same annular ring of the upper cover 11, that is, the first air inlet 113 and the air outlet 114 are at the same height or similar height positions, and are located at the lower end or near the lower end of the upper cover 11.

In a preferred embodiment, the first air inlet 113 and the air outlet 114 are arranged side by side, presenting the effect of one vent in appearance, making the appearance of the cooking device more concise and aesthetically pleasing.

The first air inlet 113 and the air outlet 114 may also be defined at the rear end position of the upper cover 11, that is, the first air inlet 113 and the air outlet 114 are located in the direction away from the user, which can avoid the hot air discharged from heat dissipation affecting the user's experience.

In other embodiments, the first air inlet 113 and the air outlet 114 may also be spaced apart, for example, the first air inlet 113 is defined on the front side of the upper cover 11, the air outlet 114 is defined on the rear side of the upper cover 11, the first air inlet 113 and the air outlet 114 are at the same height position of the upper cover 11, which can also reduce the internal space structure of the upper cover 11. The first air inlet 113 and the air outlet 114 may also be spaced apart at other positions, for example, the air outlet 114 may also be defined at the top of the upper cover 11.

The cooking device of this embodiment, due to the provision of a first heat dissipation channel, a second heat dissipation channel, and a third heat dissipation channel, the first heat dissipation channel and the second heat dissipation channel respectively introduce air from the upper cover 11 and the bottom shell 12, the two paths of air dissipate heat for components such as the second heating element 5 and the circuit board 2 in the first heat dissipation channel, and are finally discharged from the third heat dissipation channel; the first heat dissipation channel and the second heat dissipation channel enable the introduction of two paths of air for heat dissipation, which can increase the amount of air entering, and the introduction of two paths of air from different directions can respectively provide heat dissipation effects for the top and bottom of the cooking device, and can also increase the contact area with components such as the second heating element 5 and the circuit board 2, thereby improving heat dissipation efficiency to meet the heat dissipation requirements of the cooking device.

The cooking device of this embodiment also has the first air inlet 113 and the air outlet 114 of the upper cover 11 defined on the same circumference or the same annular ring of the upper cover 11, parts of the first cavity 111 and the second cavity 112 are staggered at the same height space, the layout is more compact, which can fully utilize the space inside the upper cover 11, so that the upper cover 11 can be set to a smaller volume structure, achieving miniaturized design of the upper cover 11, for example, the upper cover 11 can be set to a dome structure, semicircular structure, or other structures with the middle higher than the peripheries, which not only has a smaller volume but is also more aesthetically pleasing.

In one embodiment, the upper cover 11 defines two first air inlets 113 and one air outlet 114, the two first air inlets 113 are located on both sides of the air outlet 114, one first air inlet 113 is located on one side of the air outlet 114, and the other first air inlet 113 is located on the other side of the air outlet 114. This setting can improve the symmetry of air intake, facilitate the air flow in the first cavity 111, and avoid dead corners in the first cavity 111.

In other embodiments, more first air inlets 113 may be defined, and multiple first air inlets 113 are defined at different positions.

In one embodiment, the first opening 131 and the second opening 132 of the first inner cover 13 may be arranged side by side up and down, with the first opening 131 located above the second opening 132, so that the first opening 131 and the second opening 132 are close together, allowing the first opening 131 and the second opening 132 to align with one air outlet 114 with a larger caliber at the same time.

In one embodiment, the first opening 131 and the second opening 132 may also be arranged side by side left and right or front and back. This can also achieve a compact layout of the first opening 131 and the second opening 132.

In one embodiment, the first opening 131 and the second opening 132 may also be spaced apart, and the first opening 131 and the second opening 132 respectively correspond to one air outlet, which can also achieve exhaust of the heat dissipation channel and air intake and exhaust of the cooking cavity 122.

In one embodiment, the first air inlet 113 defines one or more first guide plates 1131, for example, the first air inlet 113 defines multiple first guide plates 1131 in a grid shape, and the multiple first guide plates 1131 are parallel to each other. The air outlet 114 defines one or more second guide plates 1141, for example, the air outlet 114 defines multiple second guide plates 1141 in a grid shape, and the multiple second guide plates 1141 are parallel to each other. The inclination directions of the first guide plates 1131 and the second guide plates 1141 are different, so that the flow direction of cold air entering the first air inlet 113 does not intersect with the flow direction of hot air discharged from the air outlet 114.

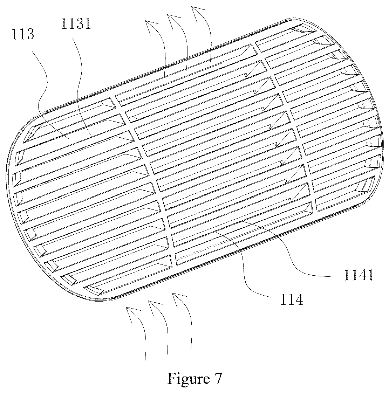

Referring to Figure 7, the first guide plates 1131 and the second guide plates 1141 are inclined up and down in a staggered manner, the first guide plates 1131 are inclined downward to guide cold air below the outer side of the first air inlet 113 into the first cavity 111. The second guide plates 1141 are inclined upward to guide hot air to discharge upward from the air outlet 114 in an inclined manner. Since the density of hot air is relatively small, it continues to rise after being discharged upward in an inclined manner, which can avoid re-entering the heat dissipation channel. In this way, cold air and hot air are staggered, which can avoid the first air inlet 113 from reintroducing the discharged hot air into the heat dissipation channel, providing better heat dissipation.

In one embodiment, the first guide plates 1131 and the second guide plates 1141 are inclined left and right in a staggered manner or front and back in a staggered manner. For example, if the first air inlet 113 and the air outlet 114 are arranged side by side on the rear side of the upper cover 11, the first guide plates 1131 and the second guide plates 1141 are inclined left and right; if the first air inlet 113 and the air outlet 114 are arranged side by side on the left or right side of the upper cover 11, the first guide plates 1131 and the second guide plates 1141 are inclined front and back. The first guide plates 1131 and the second guide plates 1141 form an outer splayed structure, which can also separate the discharged hot air from the introduced cold air, avoiding the discharged hot air from re-entering the heat dissipation channel.

In one embodiment, to avoid hot air in the second cavity 112 from re-entering the first cavity, a partition structure such as a first partition plate 115 may be defined between the first opening 131 and the second opening 132 and the first air inlet 113, and the first partition plate 115 can separate the air intake channel and the air exhaust channel to avoid confusion between them.

In one embodiment, the first opening 131 and the second opening 132 may be arranged side by side, and a second partition plate 133 may be defined between the first opening 131 and the second opening 132, the second partition plate 133 separates the first opening 131 and the second opening 132 to avoid mutual flow between the spaces of the second cavity 112 and the cooking cavity 122, that is, to avoid the hot air discharged from heat dissipation from entering the cooking cavity 122.

In one embodiment, the inner side of the third opening 141 may define a third partition plate 142, and the third partition plate 142 staggers the air intake channel and air exhaust channel of the cooking cavity 122, so that the cooking cavity 122 can achieve air intake and exhaust through the air outlet 114.

In one embodiment, the main structure of the cooking device is defined in the upper cover 11, and the lower end of the upper cover 11 mounts a bottom plate or similar structure to form a complete cooking structure. The heat insulation cavity 121 is located above, the upper cover 11 defines the heat insulation cavity 121, and the second air inlet 123 is defined in the upper cover 11, and the second air inlet 123 may be defined at the bottom of the upper cover 11. In the cooking device of this structure, two air intake heat dissipation channels can also be formed, and the two air intake heat dissipation channels merge and discharge from one air exhaust heat dissipation channel, which can provide heat dissipation efficiency.

In one embodiment, both the upper cover 11 and the bottom shell 12 of the cooking device define heat insulation cavities 12, and the heat insulation cavities 12 at the upper and lower ends respectively define corresponding second air inlets 123. In the cooking device of this structure, three air intake heat dissipation channels can be formed, and the three air intake heat dissipation channels merge and discharge from one air exhaust heat dissipation channel, which can provide heat dissipation efficiency.

The above uses specific examples to illustrate the present application, which is only used to help understand the present application and is not intended to limit the present application. For those skilled in the art to which the present application belongs, several simple deductions, deformations, or replacements can also be made based on the ideas of the present application.

## Claims

1. A cooking device, comprising:
a housing comprising an upper cover and a bottom shell, the upper cover defines a first cavity and a second cavity, the upper cover and/or the bottom shell defines a heat insulation cavity, and the upper cover and the bottom shell enclose a cooking cavity;
a circuit board defined in the first cavity; and
a fan electrically connected to the circuit board, the fan comprises a first blade and a second blade, the first blade is located in the second cavity, and the second blade is located in the cooking cavity;
**characterized in that** the upper cover defines a first air inlet and an air outlet, the first air inlet communicates with the first cavity, and a first heat dissipation channel is formed in the first cavity; the bottom shell or a bottom of the upper cover defines a second air inlet, the second air inlet communicates with the heat insulation cavity, the heat insulation cavity communicates with the first cavity, and a second heat dissipation channel is formed in the heat insulation cavity; the first cavity communicates with the second cavity, the second cavity communicates with the air outlet, a third heat dissipation channel is formed in the second cavity, and the third heat dissipation channel communicates with the first heat dissipation channel; the air outlet also communicates with the cooking cavity.

2. The cooking device according to claim 1, **characterized in that** the first air inlet is defined on a side surface of the upper cover, the air outlet is defined on a side surface or a top of the upper cover, or the air outlet is defined on a bottom or a side surface of the bottom shell, and the first blade is defined in the first heat dissipation channel, the third heat dissipation channel, or a communication point between the first heat dissipation channel and the third heat dissipation channel; during heat dissipation, a first path of air enters the first heat dissipation channel from the first air inlet on the top or side surface of the upper cover, and a second path of air enters the second heat dissipation channel from the second air inlet on the bottom or side surface of the bottom shell, and then enters the first heat dissipation channel; the first blade is configured to drive the first path of air and the second path of air to merge into the third heat dissipation channel and discharge from the air outlet.

3. The cooking device according to claim 1, **characterized in that** the first air inlet and the air outlet are located on a same circumference or a same annular ring of the upper cover.

4. The cooking device according to claim 3, **characterized in that** the first air inlet and the air outlet are arranged side by side.

5. The cooking device according to claim 1, **characterized in that** the upper cover defines a first inner cover and a second inner cover, the first inner cover and the upper cover enclose the first cavity, and the first inner cover and the second inner cover enclose the second cavity; the bottom shell defines a third inner cover, the bottom shell and the third inner cover enclose the heat insulation cavity, and the second inner cover and the third inner cover enclose the cooking cavity.

6. The cooking device according to claim 5, **characterized in that** the upper cover, the first inner cover, and the second inner cover are dome structures, and the first cavity surrounds an upper portion and peripheries of the second cavity.

7. The cooking device according to claim 5, **characterized in that** a first opening and a second opening are defined on the first inner cover, the first opening communicates with the second cavity, and the first opening is aligned and communicates with the air outlet; the second inner cover defines a third opening, the third opening communicates with the cooking cavity, and the third opening, the second opening, and the air outlet are sequentially aligned and communicated.

8. The cooking device according to claim 7, **characterized in that** a first partition plate is defined between the first opening and the second opening and the first air inlet; and/or a second partition plate is defined between the first opening and the second opening.

9. The cooking device according to any one of claims 1 to 8, **characterized in that** the first air inlet is defined with one or more first guide plates, the air outlet is defined with one or more second guide plates, and inclination directions of the first guide plates and the second guide plates are different, so that a flow direction of cold air entering the first air inlet does not intersect with a flow direction of hot air discharged from the air outlet.

10. The cooking device according to claim 9, **characterized in that** the first guide plates are inclined downward to guide cold air below the first air inlet into the first air inlet; and/or the second guide plates are inclined upward to guide hot air discharged from the air outlet to discharge upward.
